(19) Europäisches Patentamt
European Patent Office
Office européen des brevets

(11) **EP 1 966 021 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(51) Int Cl.:
*B60W 30/18* (2006.01)     *B60W 20/00* (2006.01)
*B60W 50/06* (2006.01)

(21) Anmeldenummer: **06793585.8**

(22) Anmeldetag: **18.09.2006**

(86) Internationale Anmeldenummer:
**PCT/EP2006/066443**

(87) Internationale Veröffentlichungsnummer:
**WO 2007/071464 (28.06.2007 Gazette 2007/26)**

(54) **VERFAHREN ZUM BETREIBEN EINES HYBRIDFAHRZEUGS**

METHOD FOR THE OPERATION OF A HYBRID VEHICLE

PROCEDE POUR FAIRE FONCTIONNER UN VEHICULE HYBRIDE

(84) Benannte Vertragsstaaten:
**DE FR IT**

(30) Priorität: **20.12.2005 DE 102005060858**

(43) Veröffentlichungstag der Anmeldung:
**10.09.2008 Patentblatt 2008/37**

(73) Patentinhaber: **ROBERT BOSCH GMBH
70442 Stuttgart (DE)**

(72) Erfinder:
• **FALKENSTEIN, Jens-Werner
73434 Aalen (DE)**
• **HUBER, Thomas
74915 Daisbach (DE)**

(56) Entgegenhaltungen:
**EP-A- 0 962 352      EP-A- 1 275 551
DE-A1- 10 261 278      DE-C1- 19 630 213
FR-A- 2 870 792      US-A1- 2002 117 339**

**Beschreibung**

Stand der Technik

Die Erfindung geht aus von einem Verfahren zum Betreiben eines Hybridfahrzeugs nach dem Oberbegriff des Anspruchs 1.

Die Reduzierung von Emissionen und Kraftstoffverbrauch führte in letzter Zeit zur Weiterentwicklung von Hybridantrieben für Kraftfahrzeuge. Ziel ist, den Verbrennungsmotor im Bereich günstiger Wirkungsgrade zu betreiben, im Stillstand des Fahrzeuges bzw. bei geringen Fahrzeuggeschwindigkeiten abzuschalten und elektrisch zu Fahren sowie Bremsenergie durch Rekuperation zu nutzen. Z.B. erfolgt bei Parallelhybriden eine Addition der Drehmomente von Verbrennungsmotor und einer oder mehrerer Elektromaschinen. Die Elektromaschinen sind z.B. als Startergeneratoren mit dem Riementrieb oder mit der Kurbelwelle des Verbrennungsmotors verbunden.

Schnelle Laständerungen oder Schaltvorgänge können ein Ruckeln des Fahrzeuges anregen, bei dem typischerweise die Motordrehmasse mit der Getriebedrehmasse gegen die reduzierte Fahrzeugmasse schwingt. Daneben sind noch weitere Schwingungsformen möglich. Bekannte Verfahren zur Minderung von Ruckelschwingungen basieren darauf, die Anregung des Triebstranges durch schnelle Laständerungen zu vermeiden. Dazu wird das vom Fahrer über das Fahrpedal angeforderte Drehmoment bei schnellen Änderungen mittels Führungsformer tiefpassgefiltert oder dessen Änderungsgeschwindigkeit begrenzt. Damit verzögert sich der Drehmomentenaufbau bzw. Drehmomentenabbau.

Zusätzlich erfolgen Maßnahmen beim Nulldurchgang des Antriebsmomentes, z.B. beim Übergang vom Schub- in den Zugbetrieb. Der damit verbundene Nulldurchgang des Reaktionsmomentes erzeugt ein Kippen der Motor-Getriebeeinheit in den Lagerungen. Daneben werden im Antriebsstrang vorhandene mechanische Spiele bzw. Lose durchlaufen. Aus Komfortgründen soll dieser Übergang "weich" erfolgen, was durch Gradientenbegrenzung des Antriebsmomentes während seines Nulldurchgangs erreicht wird. Auch dies ist Aufgabe des Führungsformers.

Ein allgemeines Verfahren zur Ansteuerung der Antriebsaggregate eines Hybridfahrzeuges ist aus der EP 0 962 352 bekannt. Bei dem dort offenbarten Verfahren wird ein Solldrehmoment auf die Antriebsaggregate, einen Verbrennungsmotor und eine elektrische Maschine, aufgeteilt.

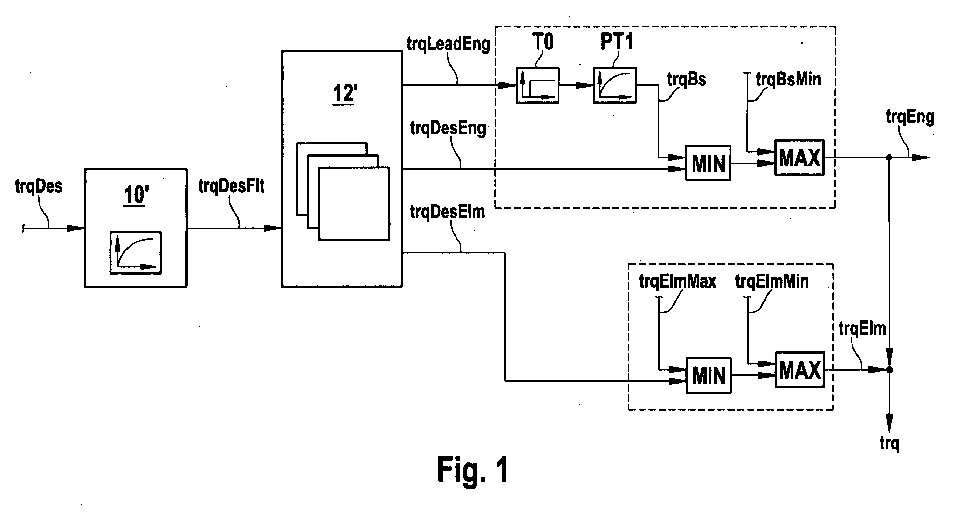

Zum besseren Verständnis der Erfindung ist der Stand der Technik in Fig.1 dargestellt. Bei Hybridantrieben ergeben mehrere Aggregate, meist ein Verbrennungsmotor und eine oder mehrere Elektromaschinen, zusammen das Antriebsmoment und sind vom Führungsformer 10' entsprechend zu koordinieren. Beim Parallelhybrid mit Kurbelwellenstartergenerator (das Schwungrad des Verbrennungsmotors ist mit der Elektromaschine, d.h. dem Kurbelwellenstartergenerator, gekoppelt), wird ein Kippen der Motor-Getriebeeinheit vom Nulldurchgang des Summenmomentes trq von Verbrennungsmotor und Elektromaschine hervorgerufen. Auch mechanische Lose werden hierbei durchlaufen. Somit könnte der

Führungsformer 10' das Summen-Solldrehmoment trqDes noch vor der eigentlichen Betriebsstrategie filtern, vgl. Fig. 1. Die Aufteilung des gefilterten Summen-Solldrehmomentes trqDesFlt auf die Solldrehmomente trqLeadEng, trqDesEng von Verbrennungsmotor und trqDesElm der Elektromaschine würde dann unter energetischen und Emissions-Gesichtspunkten im Betriebsstrategie-Block 12' erfolgen.

Moderne Ottomotoren mit Saugrohreinspritzung besitzen meist eine elektronische Drosselklappe zur Luftmassenstromregulierung. Das Fahrpedal ist von der elektronischen Drosselklappe mechanisch entkoppelt. Die endliche Einstellgeschwindigkeit des Drosselklappenstellgliedes und dynamische Füllungseffekte im Saugrohr lassen eine hochdynamische Einstellung eines vorgegebenen Luftmassenstromes und des dadurch erzeugten Verbrennungsmotordrehmomentes nicht zu. Ein Eingriff in den Zündwinkel und eine damit verbundene Reduzierung des Verbrennungsmotordrehmomentes kann dagegen nahezu verzögerungsfrei erfolgen. Für die Drehmomentansteuerung sind somit zwei Pfade vorhanden. Jedem dieser beiden Pfade kann ein zugeordnetes Solldrehmoment vorgegeben werden.

Das in Fig. 1 dargestellte Vorhalte-Sollmoment trqLeadEng für den Verbrennungsmotor wirkt auf den langsamen Luftpfad des Verbrennungsmotors. Der Luftmassenstrom wird entsprechend eingestellt. Bei optimalem Zündwinkel würde der Verbrennungsmotor ein als Basismoment bezeichnetes Drehmoment trqBs erzeugen. Im stationären Betrieb entspricht das Basismoment trqBs näherungsweise dem Vorhalte-Sollmoment trqLeadEng. Im instationären Betrieb wirken dynamische Füllungseffekte im Saugrohr, die Übertragung vom Vorhalte-Sollmoment trqLeadEng auf das Basismoment trqBs lässt sich näherungsweise mittels Reihenschaltung eines Totzeitgliedes (T0) und eines Verzögerungsglieds erster Ordnung (PT1) beschreiben.

Das zweite in Fig. 1 dargestellte Sollmoment trqDesEng für den Verbrennungsmotor wirkt auf den schnellen Zündwinkelpfad. Mittels Spätverstellung des Zündwinkels gegenüber dem optimalen Zündwinkel wird der Wirkungsgrad des Motors verschlechtert, das Istmoment trqEng des Verbrennungsmotors wird gegenüber dem Basismoment trqBs verringert.

Im Modell nach Fig. 1 sind die Zusammenhänge vereinfacht dargestellt. Das Sollmoment für den Verbrennungsmotor trqDesEng wird auf einen Bereich zwischen dem Basismoment trqBs und einem minimalen Basismoment trqBsMin begrenzt und ergibt das Istmoment trqEng des Verbrennungsmotors. Die Zeitverzögerung beim Zündwinkeleingriff ist gering und wird im Modell vernachlässigt. Das Basismoment trqBs entspricht dabei dem Istmoment trqEng des Verbrennungsmotors, das sich bei optimalem Zündwinkel ergibt. Das minimale Basismoment trqBsMin ist kleiner als das Basismoment und entspricht dem Istmoment trqEng im Falle einer maximalen Zündwinkelspätverstellung.

Auch beim Dieselmotor, insbesondere mit Turboaufladung, kann die Drehmomentansteuerung in einen langsamen Pfad mit einem Vorhalte-Sollmoment trqLeadEng und einen schnellen Pfad mit einem Sollmoment trqDesEng aufgeteilt werden, vgl. DE19630213 C1.

Die Motorsteuerung eines modernen Verbrennungsmotors kann das momentane Istdrehmoment trqEng sowie das Basismoment trqBs anhand von gemessenen oder abgeschätzten Größen ermitteln, beim Benzinmotor mit Saugrohreinspritzung, z.B. aus Motordrehzahl, Saugrohrdruck, Zündzeitpunkt und Luftzahl $\lambda$.

Die Drehmomentansteuerung von modernen Elektromaschinen weist eine sehr viel höhere Dynamik im Vergleich mit dem langsamen Pfad der Drehmomentansteuerung eines Verbrennungsmotors auf. Im Modell nach Fig. 1 wird die Verzögerung in der Drehmomentansteuerung der Elektromaschine vernachlässigt, das Istmoment trqElm ergibt sich aus dem Sollmoment trqDesElm durch Limitierung auf die Momentengrenzen trqElmMax und trqElmMin. Die Momentengrenzen der Elektromaschine werden anhand der momentanen Betriebszustände der Elektromaschine, eines oder mehrerer elektrischer Energiespeicher und eines oder mehrerer elektrischer Bordnetze ermittelt.

Das in Fig. 1 dargestellte Verfahren der Führungsformung funktioniert, solange beide Aggregate ein ähnliches Verhalten in der Dynamik der Drehmomentansteuerung aufweisen. Dies ist aufgrund der hohen Dynamik der Elektromaschine der Fall, wenn das Moment des Verbrennungsmotors über den schnellen Pfad trqDesEng beeinflusst wird.

Wird das das Moment des Verbrennungsmotors vom langsamen Pfad bestimmt, z.B. bei schnell ansteigenden Sollmomenten und verzögert ansteigendem Basismoment trqBs, welches das Istmoment trqEng begrenzt (d.h. trqDesEng> trqBs), so ergeben sich folgende Probleme:

1. Die Dynamik des Istmomentes trqEng und damit des Summenistmomentes trq wird gering aufgrund der Reihenschaltung zweier Verzögerungen, nämlich die Filterung im Führungsformer 10' und der langsame Pfad im Verbrennungsmotor (Saugrohrdynamik, Turboloch). Die Dynamik des langsamen Pfades hängt sehr stark vom Betriebspunkt des Verbrennungsmotors ab, z.B. Drehmoment, Drehzahl, Saugrohrdruck usw., so dass eine Berücksichtigung/Kompensation im Betriebsstrategie-Block 12' nur bedingt möglich wäre.

2. Aufgrund unterschiedlicher Dynamik in der Drehmomentansteuerung beider Aggregate weicht das Summenistmoment trq im instationären Betrieb stark vom gefilterten Summen-Solldrehmoment trqDesFlt ab. Zudem variiert die Abweichung je nach momentan gewählter Momentenaufteilung (Betriebsstrategie). Eine Limitierung des Gradienten von trqDesFlt beim Nulldurchgang führt dann nicht zur Limitierung des Gradienten von trq bei dessen Nulldurchgang, was sich negativ auf den Fahrkomfort auswirkt.

Vorteile der Erfindung

Das erfindungsgemäße Verfahren ermöglicht in einem Kraftfahrzeugantrieb mit wenigstens zwei Antriebsmaschinen eine genaue Formung des Summen-Istmomentes, insbesondere beim Nulldurchgang, auch bei stark variierender Dynamik in der Momentenansteuerung der einen Antriebsmaschine, insbesondere eines Verbrennungsmotors, so dass der Fahrkomfort erhöht ist. Daneben wird durch geeigneten Einsatz der anderen Antriebsmaschine, insbesondere einer Elektromaschine, eine hohe Momentendynamik des Antriebs erreicht, wobei Zündwinkeleingriffe minimiert werden, die neben Wirkungsgradverlusten bei hoher Last zu Temperaturspitzen im Katalysator des Fahrzeugs führen und dessen Lebensdauer beeinträchtigen können.

Erfindungsgemäß wird das ungefilterte Summen-Solldrehmoment als Basis für die Aufteilung auf die Aggregate (Betriebsstrategie-Block) genutzt. Die Aufteilung liefert das Vorhalte-Sollmoment für den langsamen Pfad des Verbrennungsmotors. Damit wird das Vorhalte-Sollmoment nicht zusätzlich durch den Führungsformer verzögert, was eine hohe Dynamik des Antriebs ermöglicht. Aus dem ungefilterten Summen-Solldrehmoment wird das Vorhalte-Sollmoment zur Beeinflussung des langsamen Beeinflussungspfads der ersten Antriebsmaschine gewonnen, bevor das Summen-Solldrehmoment in dem Führungsformer verarbeitet wird. Der langsame Beeinflussungspfad ist bei einem Verbrennungsmotor der Luftpfad, während der schnelle Beeinflussungspfad eine Zündwinkelverstellung verursacht. Die Elektromaschine als zweite Antriebsmaschine weist einen schnellen Beeinflussungspfad auf, da sie grundsätzlich eine hohe Dynamik aufweist. Erfindungsgemäß werden dabei dem Führungsformer als Eingangsgrößen ein ungefiltertes Solldrehmoment der zweiten Antriebsmaschine und das ungefilterte Vorhalte-Solldrehmoment der ersten Antriebsmaschine zugeführt

Der Führungsformer ermittelt in einem günstigen Verfahrensschritt unter Berücksichtigung des von der einen Antriebsmaschine, insbesondere dem Verbrennungsmotor, gemeldeten momentanen Basismomentes das Solldrehmoment für den schnellen (Zündwinkel-)Pfad des Verbrennungsmotors und das Solldrehmoment für die Elektromaschine. Aufgrund der hohen Dynamik des schnellen (Zündwinkel-)Pfades und der Elektromaschine kann das Summen-Istmoment auch im instationären Betrieb genau eingestellt werden. Der Verlauf des Summen-Istmoments, insbesondere der Gradient beim Nulldurchgang, lässt sich genau vorgeben, verbunden mit geringen Lastwechselreaktionen und hohem Fahrkomfort.

Vereinfacht wird das Verfahren, wenn das ungefilterte Vorhalte-Solldrehmoment der ersten Antriebsmaschine den Führungsformer unmodifiziert verlässt. Eine entsprechende Modifikation kann jedoch vorteilhaft sein, um z.B. Zündwinkeleingriffe bei einem Nulldurchgang des Summendrehmoments zu minimieren.

In einem weiteren günstigen Verfahrensschritt ermittelt der Führungsformer unter Berücksichtigung eines von der ersten Antriebsmaschine gemeldeten momentanen Basismoments das Solldrehmoment für den schnellen Pfad der ersten Antriebsmaschine und das Solldrehmoment der zweiten Antriebsmaschine.

In einem weiteren günstigen Verfahrensschritt wird, falls kein schneller Eingriff, insbesondere keine Zündwinkelverstellung, bei der ersten Antriebsmaschine erforderlich ist, das zweite Solldrehmoment für die erste Antriebsmaschine (schneller Pfad) gleich dem Basismoment gesetzt wird.

Alternativ ergibt sich, falls ein schneller Eingriff bei der ersten Antriebsmaschine erforderlich ist, das zweite Solldrehmoment für die erste Antriebsmaschine als Summe von Basismoment und einem Differenzmoment, das charakteristisch für einen Einfluss des schnellen Beeinflussungspfads ist.

In einem weiteren günstigen Verfahrensschritt gibt der Führungsformer die Solldrehmomente so vor, dass ein Gradient des Istdrehmoments innerhalb von zulässigen Schwellen liegt. Durch die Begrenzung des Gradienten kann eine Schwingungsanregung des Triebstrangs durch schnelle Laständerung vermieden werden.

Vorzugsweise werden im Bereich eines Nulldurchgangs des Istdrehmoments die Schwellen zur Begrenzung des Gradienten klein gewählt. Damit kann ein komfortabler, weicher Übergang z.B. von einem Schubbetrieb in einen Zugbetrieb erreicht werden.

In einem günstigen Verfahrensschritt kann das Solldrehmoment für die zweite Antriebsmaschine so gewählt werden, dass das zweite Solldrehmoment der ersten Antriebsmaschine gleich dem Basismoment wird. Dies ist günstigerweise dann der Fall, wenn ein Eingriff auf dem schnellen Beeinflussungspfad der ersten Maschine, insbesondere ein Zündwinkeleingriff, vermieden werden soll und keine Momentenbegrenzung der zweiten Antriebsmaschine vorliegt.

Liegt eine Momentenbegrenzung der zweiten Antriebsmaschine vor, kann günstigerweise zusätzlich eine Beeinflussung der ersten Antriebsmaschine auf dem schnellen Beeinflussungspfad (zweites Solldrehmoment) erfolgen. Ein Zündwinkeleingriff kann auch ohne Momentenbegrenzung der zweiten Antriebsmaschine sinnvoll sein, wenn an dieser ein Drehmoment beschränkt werden soll, um etwa bei einer Elektromaschine Stromanstiegsgeschwindigkeiten eines Energiespeichers zu begrenzen und so dessen Lebensdauer zu erhöhen.

Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus einem nachfolgend anhand von Zeichnungen dargestellten Ausführungsbeispiel der Erfindung.

Im Folgenden zeigen:

Fig. 1    eine bekanntes Schema eines Führungsformers einer Hybridantriebsteuerung;
Fig. 2    eine Schema eines bevorzugten Führungsformers einer Hybridantriebsteuerung nach der Erfindung;
Fig. 3    einen Ablauf einer Berechnung eines Gradientenlimits trqLimGrad
Fig. 4    einen weiteren Berechnungsablauf; und
Fig. 5    Simulationsergebnisse einer Berechnung mit einem erfindungsgemäßen Führungsformer.

Beschreibung des Ausführungsbeispiels

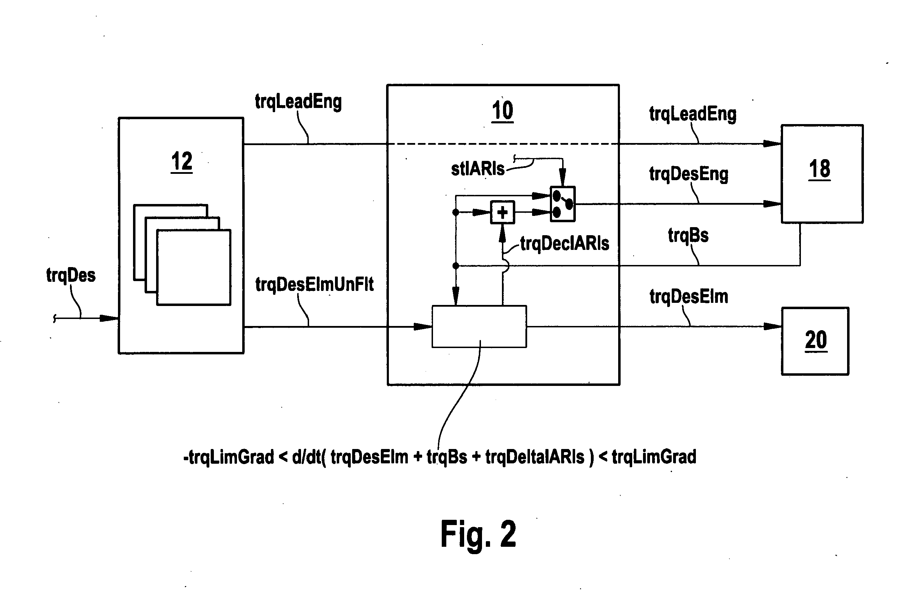

In den Figuren 2 bis 5 ist ein Ausführungsbeispiel für die Erfindung dargestellt.

Ein Verbrennungsmotor 18, z.B. ein Ottomotor, ist beispielhaft mit Saugrohreinspritzung, elektronischem Gaspedal (E-Gas, elektronische Drosselklappe) und Katalysator versehen. Das Schwungrad des Verbrennungsmotors ist mit einer Elektrömaschine 20 gekoppelt (Kurbelwellenstartergenerator), die Istdrehmomente trqEng von Verbrennungsmotor 18 und trqElm Elektromaschine 20 addieren sich zum Istdrehmoment trq des gesamten Antriebs, d.h. zum Summendrehmoment von Verbrennungsmotor 18 und Elektromaschine 20.

Ein Betriebsstrategie-Block 12 teilt das vom Fahrer bzw. von Komfortfunktionen angeforderte Summen-Solldrehmoment trqDes auf das Vorhalte-Solldrehmoment trqLeadEng für den Verbrennungsmotor 18 und das ungefilterte Solldrehmoment trqDesElmUnFlt der Elektromaschine 20 unter energetischen und Emissions-Gesichtspunkten auf (Fig. 2).

Im Ausführungsbeispiel erfolgt aus Gründen der Übersichtlichkeit keine Modifikation des Vorhalte-Solldrehmoments trqLeadEng im Block eines bevorzugten Führungsformers 10. Eine entsprechende Modifikation kann vorteilhaft sein, z.B. um Zündwinkeleingriffe beim Nulldurchgang des Summdrehmomentes trq zu minimieren.

Das Basismoment trqBs folgt dem Vorhalte-Solldrehmoment trqLeadEng aufgrund der Saugrohrdynamik (modelliert als Totzeitglied und Verzögerungsglied erster Ordnung PT1) verzögert und wird dem Führungsformer 10 übermittelt. Der Führungsformer 10 beeinflusst die Solldrehmomente trqDesEng und trqDesElm. Ist kein Zündwinkeleingriff erforderlich, so wird das Solldrehmoment trqDesEng für den Verbrennungsmotor 18 auf das Basismoment trqBs gesetzt:

$$trqDesEng = trqBs$$

Das Istmoment trqEng des Verbrennungsmotors 18 entspricht dann näherungsweise dem Basismoment trqBs und damit dem Sollmoment:

$$trqEng = trqDesEng = trqBs.$$

Aufgrund der hohen Dynamik der Elektromaschine 20 entspricht das Istmoment trqElm näherungsweise dem Sollmoment trqDesElm, falls die Elektromaschine 20 sich nicht an den Momentengrenzen befindet:

$$trqElm = trqDesElm$$

Für das Istdrehmoment trq = trqEng + trgElm des gesamten Antriebs gilt dann näherungsweise:

$$(1) \quad trq = trqDesEng + trqDesElm = trqBs + trqDesElm$$

Ist ein Zündwinkeleingriff erforderlich, wird das Statusbit stlARls=true gesetzt, das Solldrehmoment trqDesEng des Verbrennungsmotors 18 ergibt sich aus der Summe von Basismoment trqBs und einem Differenzmoment trqDeclARls (negativ), das den Einfluss der Zündwinkelspätverstellung kennzeichnet:

$$trqDesEng = trqBs + trqDeclARls$$

Aufgrund der hohen Dynamik des Zündwinkeleingriffes entspricht das Istmoment trqEng des Verbrennungsmotors 18 näherungsweise dem Solldrehmoment trqDesEng:

$$trqEng = trqDesEng = trqBs + trqDeclARls$$

Für das Istdrehmoment trq = trqEng + trgElm des gesamten Antriebs gilt dann:

$$(2) \quad trq=trqDesEng+trqDesElm=trqBs+trqDeclARls+trqDesElm$$

Der Führungsformer 10 gibt die Solldrehmomente so vor, dass für den Gradienten, d.h. die zeitliche Ableitung des Istdrehmoments trq gilt:

$$(3) \quad -trqLimGrad < d/dt(trq) < trqLimGrad$$

Mit

$$(4) \qquad d/dt(trq) = d/dt(trqDesEng + trqDesElm).$$

Der Führungsformer 10 des Ausführungsbeispiels versucht zunächst einen Zündwinkeleingriff zu vermeiden und das Solldrehmoment trqDesElm für die Elektromaschine 20 entsprechend zu wählen. In diesem Fall gilt für Gl. (3), (4)

$$trqDesEng = trqBs$$

Ist dies aufgrund einer Momentenbegrenzung trqElmMin der Elektromaschine 20 nicht möglich, erfolgt zusätzlich ein Zündwinkeleingriff, dabei gilt für Gl. (3), (4):

$$trqDesEng = trqBs + trqDeclARls$$

$$trqDesElm = trqElmMin$$

Alternativ kann sinnvoll sein, Zündwinkeleingriffe zu nutzen, obwohl sich die Elektromaschine 20 noch nicht an der Momentenbegrenzung befindet, z.B. um die Drehmomentgradienten an der Elektromaschine 20 und damit aus Lebensdauergründen die Stromanstiegsgeschwindigkeiten eines elektrischen Energiespeichers zu limitieren.

Das Gradientenlimit trqLimGrad wird im Bereich des Nulldurchganges des Istdrehmoments trq klein gewählt, um einen weichen Übergang z.B. vom Schub- in den Zugbetrieb zu erhalten.

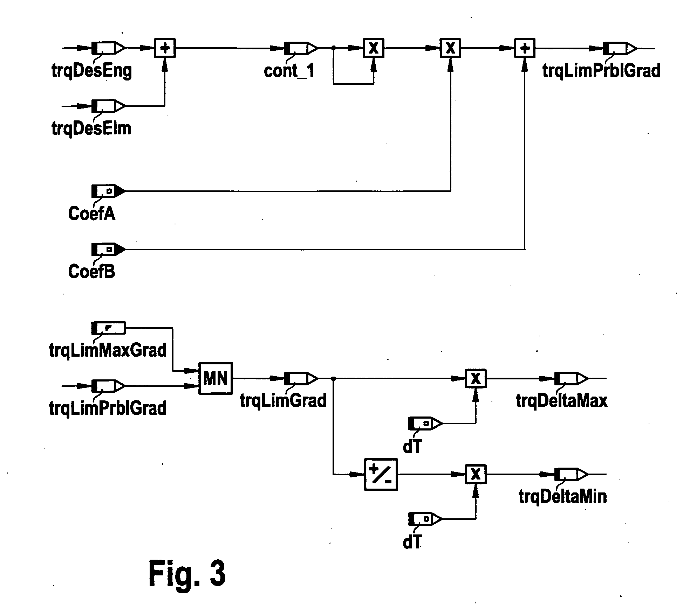

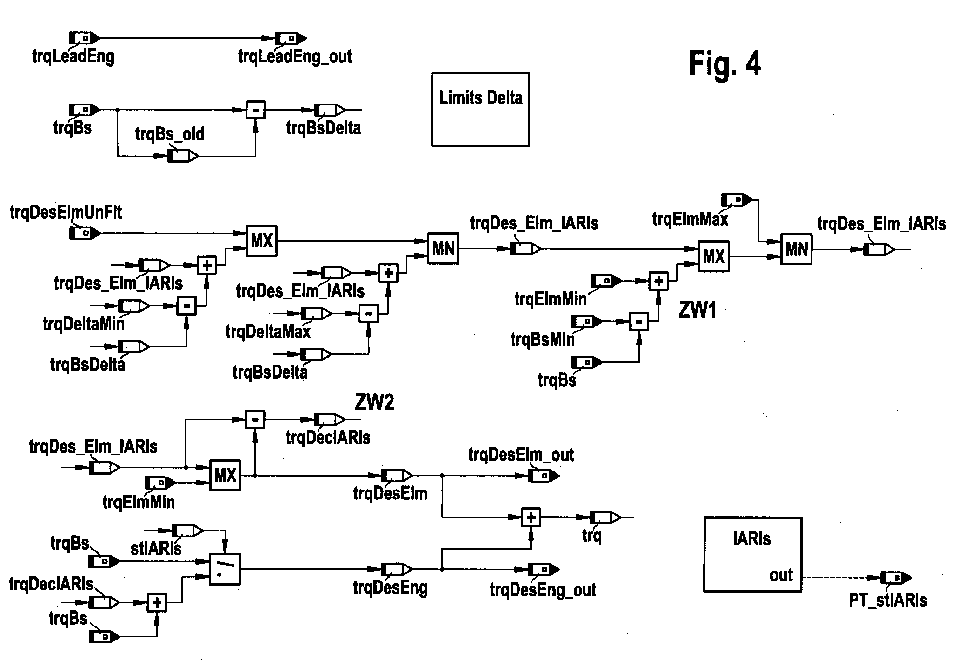

Die Fig. 3 und 4 zeigen ein Beispiel für eine Realisierung. In Fig. 3 ist die Berechnung des Gradientenlimits trqLimGrad dargestellt. Die Größe trqLimPrblGrad ergibt sich durch einen parabelförmigen Zusammenhang aus dem Istdrehmoment trq:

$$trqLimPrblGrad = CoefA \cdot trq^2 + CoefB$$

mit

$$trq = trqDesEng + trqDesElm,$$

trqLimPrblGrad nimmt somit bei trq=0 den Wert von CoefB an und wird bei trq>0 oder bei trq<0 entsprechend größer.

Das Gradientenlimit trqLimGrad ergibt sich aus trqLimPrblGrad durch Minimumbildung mit der Größe trqLimMaxGrad und ist somit auch bei stark positivem oder stark negativem Istdrehmoment trq auf den Wert von trqLimMaxGrad begrenzt. Dies führt zu einer im gesamten Momentenbereich wirkenden Gradientenbegrenzung des Istdrehmoments trq, um die Schwingungsanregung des Triebstranges durch schnelle Laständerungen zu vermeiden.

Die Größen CoefA, CoejB und trqLimMaxGrad sind Parameter, die durch entsprechende Bedatung eine Anpassung an einen bestimmten Fahrzeugtyp erlauben.

Die Realisierung des Algorithmus erfolgt durch Diskretisierung. Aus dem Gradientenlimit trqLimGrad ergeben sich durch Multiplikation mit der Größe dT, die die Abtastzeit (d.h. Abtastperiodendauer, Zeit zwischen zwei Berechnungszyklen) kennzeichnet, die erlaubten Änderungen trqDeltaMax und trqDeltaMin für das Summen-Istmoment trq zwischen zwei Abtastungen.

Das Sollmoment trqDesElm für die Elektromaschine 20 ergibt sich aus der Größe trqDes_Elm_IARls. Der Sollwert für die Größe trqDes_Elm_IARls ist das von der Betriebsstrategie angeforderte, ungefilterte Solldrehmoment trqDesElmUnFlt für die Elektromaschine-20 (vgl. Fig. 2).

Im stationären Betrieb stellt sich damit

$$\text{trqDesElm} = \text{trqDes\_Elm\_IARls} = \text{trqDesElmUnFlt}$$

ein, d.h. die Elektromaschine 20 erzeugt das von der Betriebsstrategie vorgegebene Solldrehmoment, es erfolgt kein Zündwinkeleingriff.

Dabei sind Änderungen der Größe trqDes_Elm_IARls so gewählt, dass die zuvor berechneten erlaubten Änderungen des Summen-Istmoments trq eingehalten werden. Dazu wird, wie in Fig. 4 dargestellt, zunächst die Änderung trqBsDelta des Basismoments trqBs zwischen zwei Abtastungen ermittelt (Fig. 4). Die Größe trqBsDelta wird von den erlaubten Änderungen trqDeltaMax und trqDeltaMin für das Summen-Istmoment trq subtrahiert. Dadurch ergeben sich die erlaubten Änderungen für die Größe trqDes_Elm_IARls.

Unterschreitet die Größe trqDes_Elm_IARls die untere Momentenbrgrenzung trqElmMin der Elektromaschine 20, wird zusätzlich eine Zündwinkelspätverstellung ZW2 über das Differenzmoment trqDeclARls realisiert.

Die untere Grenze der Größe trqDes_Elm_IARls ergibt sich daher aus der unteren Momentenbegrenzung trqElmMin der Elektromaschine 20 und der maximalen Zündwinkelspätverstellung ZW1. Die obere Grenze der Größe trqDes_Elm_IARls ergibt sich aus der oberen Momentenbegrenzung trqElmMax der Elektromaschine 20.

Weiterhin wird aus trqLeadEng ein Wert trqLeadEng_out erzeugt.

Wie bereits dargestellt, versucht der Algorithmus des Ausführungsbeispiels zunächst, das Moment trqDes_Elm_IARls mit der Elektromaschine 20 einzustellen. Gelingt das infolge einer Momentenbegrenzung trqElmMin der Elektromaschine 20 nicht, wird zusätzlich eine Zündwinkelspätvertellung ZW2 über das Differenzmoment trqDeclARls realisiert:

$$\text{trqDeclARls} = \text{trqDes\_Elm\_IARls} - \text{MAX(trqDes\_Elm\_IARls, trqElmMin)}$$

Bei trqDeclARls < 0 wird das Zündwinkel-Statusbit stlARls=true gesetzt, für trqDeclARls = 0 gilt stlARls=false.

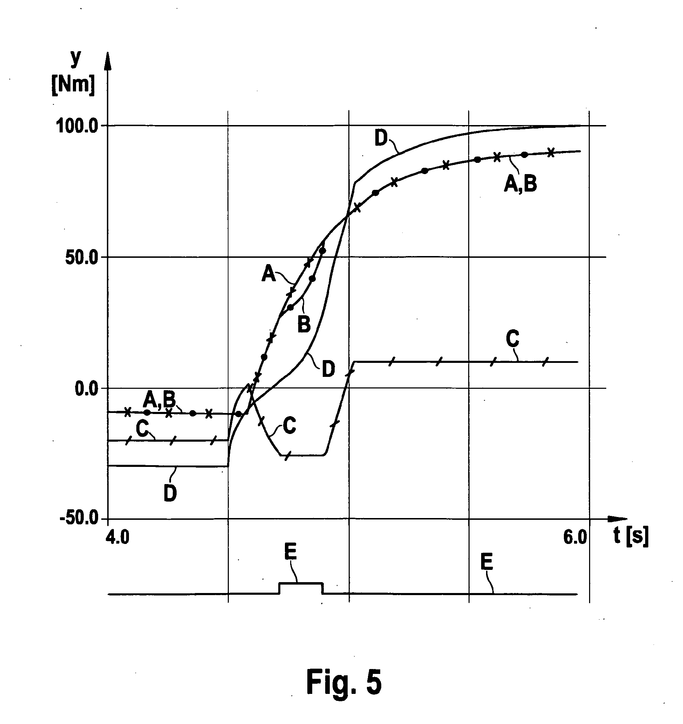

Die Fig. 5 zeigt Simulationsergebnisse für einen Sprung im ungefilterten Summen-Solldrehmoment trqDes von -30 Nm auf 100 Nm zum Zeitpunkt t = 4,5 Sekunden (vgl. Fig. 2). Basierend darauf erzeugt die Betriebsstrategie 12 bzw. Aufteilung in diesem Beispiel einen Sprung im Vorhalte-Sollmoment trqLeadEng von -10 Nm auf 90 Nm, sowie einen Sprung im ungefilterten Solldrehmoment trqDesElmUnFlt der Elektromaschine 20 von -20 Nm auf 10 Nm zum Zeitpunkt 4,5 sec.

Die Übertragung von dem Vorhalte-Sollmoment trqLeadEng auf das Basismoment trqBs ist mittels Reihenschaltung eines Totzeitglieds und eines Verzögerungsglieds erster Ordnung (PT1) beschrieben, das Basismoment trqBs (Kurve A) folgt dem Vorhalte-Sollmoment entsprechend verzögert. Der Führungsformer 10 erhöht sofort nach dem Sprung das Sollmoment trqDesElm (Kurve C), was zu einem schnellen Ansprechen des Istmomentes trq (Kurve D) auf den Fahrerwunsch (Summen-Solldrehmoment trqDes) führt. Dies erfolgt bereits zu einem Zeitpunkt, zu dem das Basismoment trqBs infolge der Totzeit noch keine Reaktion zeigt. Das erfindungsgemäße Verfahren verbessert somit das Ansprechverhalten des Hybridfahrzeugs gegenüber einem vergleichbaren, nicht hybridisierten Serienfahrzeug.

Als Folge der starken Gradientenlimitierung mittels trqLimGrad im Bereich des Nulldurchganges ergibt sich ein weicher Übergang vom Schubbetrieb (trq<0) in den Zugbetrieb (trq>0), zunächst verbunden mit einer Reduzierung des Sollmomentes trqDesEim. Die Momentenbegrenzung trqElmMin der Elektromaschine 20 beträgt -25 Nm, der Stellbereich ist nicht ausreichend für die alleinige Formung des Nulldurchganges mit der Elektromaschine 20. Aus diesem Grund erfolgt ein temporärer Zündwinkeleingriff (stlARls=true) (Kurve E), die Differenz zwischen Basismoment trqBs (Kurve A) und Sollmoment trqDesEng (Kurve B) des Verbrennungsmotors 18 während des Zündwinkeleingriffes entspricht dem Differenzmoment trqDeclARls.

Das erfindungsgemäße Verfahren erlaubt eine genaue Formung des Istmomentes trq auch bei stark variierender Dynamik des langsamen Pfades (der Übertragung vom Vorhalte-Sollmoment trqLeadEng auf das Basismoment trqBs), die vom Betriebspunkt des Verbrennungsmotors 18 (Drehmoment, Drehzahl, Saugrohrdruck usw.) abhängt.

Mit dem Einsatz der Elektromaschine 20 zur Führungsformung werden Zündwinkeleingriffe minimiert, die neben Wirkungsgradverlusten bei hoher Last zu Temperaturspitzen im

Katalysator führen und dessen Lebensdauer beeinträchtigen können.

**Patentansprüche**

**1.** Verfahren zum Betreiben eines Hybridantriebs mit wenigstens einer ersten und einer zweiten antriebsverbundenen Antriebsmaschine (18, 20), bei dem ein Istdrehmoment (trq) wenigstens einer der Antriebsmaschinen (18, 20) durch einen Führungsformer (10) beeinflusst wird, indem aus einem Summen-Solldrehmoment (trqDes) ein erstes Solldrehmoment (trqLeadEng) für einen langsamen und ein zweites Solldrehmoment (trqDesEng) für einen schnellen Beeinflussungspfad für die erste Antriebsmaschine (18) und ein Solldrehmoment (trqDesElm) für einen schnellen Beeinflussungspfad der zweiten Antriebsmaschine (20) erzeugt wird, wobei aus dem ungefilterten Summen-Solldrehmoment (trqDes) das Vorhalte-Sollmoment (trqLeadEng) zur Beeinflussung des langsamen Beeinflussungspfads der ersten Antriebsmaschine (18) gewonnen wird, bevor das Summen-Solldrehmoment (trqDes) in dem Führungsformer (10) verarbeitet wird **dadurch gekennzeichnet, dass** dem Führungsformer (10) als Eingangsgrößen ein ungefiltertes Solldrehmoment (trqDesElmUnFlt) der zweiten Antriebsmaschine (20) und das ungefilterte Vorhalte-Solldrehmoment (trqLeadEng) der ersten Antriebsmaschine (18) zugeführt wird.

2. Verfahren nach Anspruch 1, **dadurch gekennzeichnet, dass** das ungefilterte Vorhalte-Solldrehmoment (trqLeadEng) der ersten Antriebsmaschine (18) den Führungsformer (10) unmodifiziert verlässt.

3. Verfahren nach Anspruch 1, **dadurch gekennzeichnet, dass** das ungefilterte Vorhalte-Solldrehmoment (trqLeadEng) der ersten Antriebsmaschine (18) den Führungsformer (10) modifiziert verlässt.

4. Verfahren nach einem der vorhergehenden Ansprüche, **dadurch gekennzeichnet, dass** der Führungsformer (10) unter Berücksichtigung eines von der einen Antriebsmaschine (18) gemeldeten momentanen Basismoments (trqBs) das Solldrehmoment (trqDesEng) für den schnellen Pfad der ersten Antriebsmaschine (18) und das Solldrehmoment (trqDesElm) der zweiten Antriebsmaschine (20) ermittelt.

5. Verfahren nach einem der vorhergehenden Ansprüche, **dadurch gekennzeichnet, dass**, falls kein schneller Eingriff bei der ersten Antriebsmaschine (18) erforderlich ist, das zweite Solldrehmoment (trqDesEng) für die erste Antriebsmaschine (18) gleich dem Basismoment (trqBs) gesetzt wird.

6. Verfahren nach einem der Ansprüche 1 bis 4, **dadurch gekennzeichnet, dass**, falls ein schneller Eingriff bei der ersten Antriebsmaschine (18) erforderlich ist, das zweite Solldrehmoment (trqDesEng) für die erste Antriebsmaschine (18) sich als Summe von Basismoment (trqBs) und einem Differenzmoment (trqIARls) ergibt, das charakteristisch für einen Einfluss des schnellen Beeinflussungspfads ist.

7. Verfahren nach einem der vorhergehenden Ansprüche, **dadurch gekennzeichnet, dass** der Führungsformer (10) die Solldrehmomente (trqDesEng, trqDesElm) so vorgibt, dass ein Gradient des Istdrehmoments (trq) innerhalb von zulässigen Schwellen liegt.

8. Verfahren nach Anspruch 7, **dadurch gekennzeichnet, dass** im Bereich eines Nulldurchgangs des Istdrehmoments (trq) die Schwellen zur Begrenzung des Gradienten klein gewählt werden.

9. Verfahren nach einem der vorhergehenden Ansprüche, **dadurch gekennzeichnet, dass** das Solldrehmoment (trqDesElm) für die zweite Antriebsmaschine (20) so gewählt wird, dass das zweite Solldrehmoment (trqDesEng) der ersten Antriebsmaschine (18) gleich dem Basismoment (trqBs) wird.

10. Verfahren nach Anspruch 9, **dadurch gekennzeichnet, dass** bei einer Momentenbegrenzung der zweiten Antriebsmaschine (20) zusätzlich eine Beeinflussung der ersten Antriebsmaschine (18) auf dem schnellen Beeinflussungspfad erfolgt.

11. Verfahren nach einem der Ansprüche 1 bis 9, **dadurch gekennzeichnet, dass** ein Zündwinkeleingriff ohne Momentenbegrenzung der zweiten Antriebsmaschine (20) erfolgt.

**Claims**

1. Method for operating a hybrid drive having at least a first and a second drive-connected drive machine (18, 20), in which an actual torque (trq) of at least one of the drive machines (18, 20) is influenced by a reference former (10) in that a first setpoint torque (trqLeadEng) for a slow influencing path and a second setpoint torque (trqDesEng) for a rapid influencing path are generated for the first drive machine (18), and a setpoint torque (trqDesElm) for a rapid influencing path of the second drive machine (20) is generated, from a composite setpoint torque (trqDes), wherein the lead setpoint torque (trqLeadEng) for influencing the slow influencing path of the first drive machine (18) is acquired from the unfiltered composite setpoint torque (trqDes) before the composite setpoint torque (trqDes) is processed in the reference former (10), **characterized in that** an unfiltered setpoint torque (trqDesElmUnFlt) of the second drive machine (20) and the unfiltered lead setpoint torque (trqLeadEng) of the first drive machine (18) are fed as input variables to the reference former (10).

2. Method according to Claim 1, **characterized in that** the unfiltered lead setpoint torque (trqLeadEng) of the first drive machine (18) leaves the reference former (10) unmodified.

3. Method according to Claim 1, **characterized in that** the unfiltered lead setpoint torque (trqLeadEng) of the first drive machine (18) leaves the reference former (10) modified.

4. Method according to one of the preceding claims, **characterized in that** the reference former (10) takes into account the setpoint torque (trqDesEng) for the rapid path of the first drive machine (18) and the setpoint torque (trqDesElm) of the second drive machine (20) by taking into account an instantaneous basic torque (trqBs) which is signalled by one drive machine (18).

5. Method according to one of the preceding claims, **characterized in that**, if there is no need for a rapid intervention in the first drive machine (18), the second setpoint torque (trqDesEng) for the first drive machine (18) is set to be equal to the basic torque (trqBs).

6. Method according to one of Claims 1 to 4, **characterized in that**, if a rapid intervention is necessary in the first drive machine (18), the second setpoint torque (trqDesEng) for the first drive machine (18) is obtained as the sum of the basic torque (trqBs) and a differential torque (trq|AR|s), which is characteristic of influence of the rapid influencing path.

7. Method according to one of the preceding claims, **characterized in that** the reference former (10) predefines the setpoint torques (trqDesEng, trqDesElm) in such a way that a gradient of the actual torque (trq) is within permissible thresholds.

8. Method according to Claim 7, **characterized in that** small values are selected for the thresholds for limiting the gradient in the region of a zero crossover of the actual torque (trq).

9. Method according to one of the preceding claims, **characterized in that** values are selected for the setpoint torque (trqDesElm) for the second drive machine (20) such that the second setpoint torque (trqDesEng) of the first drive machine (18) becomes equal to the basic torque (trqBs).

10. Method according to Claim 9, **characterized in that** when torque limitation of the second drive machine (20) is performed, the first drive machine (18) on the rapid influencing path is additionally influenced.

11. Method according to one of Claims 1 to 9, **characterized in that** an ignition angle intervention is carried out without torque limitation of the second drive machine (20).

**Revendications**

1. Procédé de conduite d'un entraînement hybride qui présente au moins une première et une deuxième machine d'entraînement (18, 20) reliées à entraînement, dans lequel
   un dispositif (10) de formation de guidage agit sur un couple de rotation de consigne (trq) d'au moins l'une des machines d'entraînement (18, 20) en formant à partir d'un couple total de rotation de consigne (trqDes) un premier couple de rotation de consigne (trqLeadEng) pour un parcours d'action lente et un deuxième couple de rotation de consigne (trqDesEng) pour un parcours d'action rapide sur la première machine d'entraînement (18) et un couple de rotation de consigne (trqDesElm) pour un parcours d'action rapide sur la deuxième machine d'entraînement (20), le couple de consigne de réserve (trqLeadEng) qui agit sur le parcours d'action lente de la première machine d'entraînement (18) étant obtenu à partir du couple total de rotation de consigne (trqDes) non filtré avant que le couple total de rotation de consigne (trqDes) soit traité dans le dispositif (10) de formation de guidage,
   **caractérisé en ce que**
   le dispositif (10) de formation de guidage reçoit comme grandeurs d'entrée un couple de rotation de consigne (trqDesElmUnFlt) non filtré de la deuxième machine d'entraînement (20) et le couple de rotation de consigne de réserve (trqLeadEng) non filtré de la première machine d'entraînement (18).

**2.** Procédé selon la revendication 1, **caractérisé en ce que** le couple de rotation de consigne de réserve non filtré (trqLeadEng) de la première machine d'entraînement (18) quitte le dispositif (10) de formation de guidage sans être modifié.

**3.** Procédé selon la revendication 1, **caractérisé en ce que** le couple de rotation de consigne de réserve non filtré (trqLeadEng) de la première machine d'entraînement (18) quitte le dispositif (10) de formation de guidage après avoir été modifié.

**4.** Procédé selon l'une des revendications précédentes, **caractérisé en ce qu'**en tenant compte d'un couple de base (trqBs) instantané annoncé par la machine d'entraînement (18), le dispositif (10) de formation de guidage détermine le couple de rotation de consigne (trqDesEng) pour le parcours rapide de la première machine d'entraînement (18) et le couple de rotation de consigne (trqDesElm) de la deuxième machine d'entraînement (20).

**5.** Procédé selon l'une des revendications précédentes, **caractérisé en ce qu'**au cas où aucune action rapide sur la première machine d'entraînement (18) n'est nécessaire, le deuxième couple de rotation de consigne (trqDesEng) de la deuxième machine d'entraînement (18) est défini comme égal au couple de base (trqBs).

**6.** Procédé selon l'une des revendications 1 à 4, **caractérisé en ce qu'**au cas où une action rapide est nécessaire sur la première machine d'entraînement (18), le deuxième couple de rotation de consigne (trqDesEng) de la première machine d'entraînement (18) résulte de la somme du couple de base (trqBs) et d'un couple différentiel (trq |AR |s) caractéristique d'une action du parcours d'action rapide.

**7.** Procédé selon l'une des revendications précédentes, **caractérisé en ce que** le dispositif (10) de formation de guidage détermine les couples de rotation de consigne (trqDesEng, trqDesElm) de telle sorte qu'un gradient du couple de rotation effectif (trq) soit situé entre des seuils admissibles.

**8.** Procédé selon la revendication 7, **caractérisé en ce que** dans la zone d'un passage par zéro du couple de rotation effectif (trq), les seuils sélectionnés pour limiter le gradient sont bas.

**9.** Procédé selon l'une des revendications précédentes, **caractérisé en ce que** le couple de rotation de consigne (trqDesElm) pour la deuxième machine d'entraînement (20) est sélectionné de telle sorte que le deuxième couple de rotation de consigne (trqDesEng) de la première machine d'entraînement (18) soit égal au couple de base (trqBs).

**10.** Procédé selon la revendication 9, **caractérisé en ce que** lorsque le couple de la deuxième machine d'entraînement (20) est limité, le procédé agit sur la première machine d'entraînement (18) par le parcours d'action rapide.

**11.** Procédé selon l'une des revendications 1 à 9, **caractérisé en ce qu'**une intervention sur l'angle d'allumage a lieu sans limitation du couple de la deuxième machine d'entraînement (20).

Fig. 1

**Fig. 2**

-trqLimGrad < d/dt( trqDesElm + trqBs + trqDeltaIARIs ) < trqLimGrad

EP 1 966 021 B1

**Fig. 3**

Fig. 4

Limits Delta

IARIs

trqLeadEng_out

trqLeadEng

trqBs

trqBsDelta

trqBs_old

trqDesElmUnFlt

trqDes_Elm_IARIs

trqDeltaMin

trqBsDelta

trqDes_Elm_IARIs

trqDeltaMax

trqBsDelta

trqDes_Elm_IARIs

trqElmMin

trqBsMin

trqBs

trqDes_Elm_IARIs

ZW1

trqElmMax

trqDes_Elm_IARIs

trqDes_Elm_IARIs

trqElmMin

ZW2

trqDeclARIs

trqDesElm

trqDesElm_out

trq

trqDesEng

trqDesEng_out

stIARIs

trqBs

trqDeclARIs

trqBs

out

PT_stIARIs

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0962352 A

- DE 19630213 C1